# DEMANDE DE BREVET EUROPEEN

(11) **EP 4 431 792 A1**
(43) Date de publication de la demande: **18.09.2024**
(21) Numéro de dépôt: 24161634.1
(22) Date de dépôt: 06.03.2024
(51) Int. Cl.: F17C 9/04

(54) **SYSTÈME D'ALIMENTATION EN GAZ POUR APPAREILS CONSOMMATEURS DE GAZ À HAUTE ET BASSE PRESSION**

(30) Priorité: 14.03.2023 FR 2302351
(71) Demandeur: GAZTRANSPORT ET TECHNIGAZ, 78470 Saint-Rémy-lès-Chevreuse (FR)
(72) Inventeur: NARME, Romain, 78470 SAINT REMY LES CHEVREUSE (FR); MOUSSAOUI, Selma, 78470 SAINT REMY LES CHEVREUSE (FR)
(74) Mandataire: Ex Materia

(57) **Abrégé**

La présente invention concerne un système d'alimentation (1) en gaz d'un appareil consommateur de gaz à haute pression (4) et d'un appareil consommateur de gaz à basse pression (5) d'un ouvrage flottant comprenant une cuve (8) contenant le gaz, le système d'alimentation (1) comprenant un premier circuit d'alimentation (2) comprenant une première pompe (9), un deuxième circuit d'alimentation (3), une ligne de retour (14) de gaz, un premier échangeur de chaleur (6) et un deuxième échangeur de chaleur (7) configurés pour opérer un échange de chaleur entre le gaz du premier circuit d'alimentation (2) et le gaz circulant dans la ligne de retour (14), caractérisé en ce que la ligne de retour (14) est connectée au premier circuit d'alimentation (2), la ligne de retour (14) comprenant une deuxième pompe (42).

## Description

La présente invention se rapporte au domaine des navires de stockage et/ou de transport de gaz à l'état liquide et concerne plus particulièrement un système d'alimentation en gaz pour appareils consommateurs compris au sein de tels navires.

Au cours d'un trajet effectué par un navire comprenant une cuve de gaz à l'état liquide destiné à être consommé et/ou à être livré vers un point de destination, ledit navire peut être apte à utiliser au moins une partie dudit gaz à l'état liquide afin d'alimenter au moins l'un de ses moteurs, et ce via un système d'alimentation en gaz. C'est le cas des navires pourvus d'un moteur de propulsion de type ME-GI. Afin d'alimenter ce type de moteur, le gaz doit être comprimé à très haute pression par des compresseurs spéciaux aptes à comprimer le gaz jusqu'à 400 bars, mais de tels compresseurs sont chers, engendrent des frais de maintenance conséquents et induisent des vibrations au sein du navire.

Une alternative à l'installation de ces compresseurs à haute pression est de vaporiser le gaz sous forme liquide à 400 bars avant que ce dernier ne soit envoyé au moteur de propulsion. Une telle solution ne permettant pas d'éliminer le gaz à l'état vapeur (ou BOG, qui en anglais signifie « boil-off gas ») se formant naturellement au sein d'une cuve contenant au moins partiellement la cargaison, des compresseurs basse pression peuvent être installés pour alimenter un moteur auxiliaire, capable de consommer le gaz sous forme vapeur à basse pression. Par ailleurs en cas d'excédent de gaz à l'état vapeur, celui-ci peut être reliquéfié par échange de chaleur puis détendu avant d'être renvoyé dans la cuve.

Cependant, avant le retour en cuve, une fraction d'environ 15% du gaz reliquéfié se vaporise de nouveau au cours de la détente. Le gaz retourne donc dans la cuve partiellement à l'état vapeur ce qui nuit à la productivité du système d'alimentation.

La présente invention permet de résoudre ce problème et propose un système d'alimentation en gaz d'au moins un appareil consommateur de gaz à haute pression et d'au moins un appareil consommateur de gaz à basse pression d'un ouvrage flottant comprenant au moins une cuve configurée pour contenir le gaz, le système d'alimentation comprenant :
- au moins un premier circuit d'alimentation en gaz de l'appareil consommateur de gaz à haute pression, comprenant au moins une première pompe configurée pour pomper le gaz prélevé à l'état liquide dans la cuve,
- au moins un évaporateur haute pression configuré pour évaporer le gaz circulant dans le premier circuit d'alimentation en gaz,

- au moins un deuxième circuit d'alimentation en gaz de l'appareil consommateur de gaz à basse pression, comprenant au moins un compresseur configuré pour comprimer du gaz prélevé à l'état vapeur dans la cuve jusqu'à une pression compatible avec les besoins de l'appareil consommateur de gaz à basse pression,
- au moins une ligne de retour de gaz connectée en entrée au deuxième circuit d'alimentation en aval du compresseur,
- au moins un premier échangeur de chaleur et au moins un deuxième échangeur de chaleur chacun configurés pour opérer un échange de chaleur entre le gaz circulant dans la ligne de retour à l'état vapeur et le gaz à l'état liquide circulant dans le premier circuit d'alimentation,

caractérisé en ce que la ligne de retour est connectée en sortie au premier circuit d'alimentation au niveau d'un point de convergence disposé entre la première pompe et le premier échangeur de chaleur, la ligne de retour comprenant une deuxième pompe disposée entre le premier échangeur de chaleur et le point de convergence.

Le système d'alimentation selon l'invention permet ainsi d'éviter de renvoyer du gaz à l'état vapeur vers la cuve suite à la détente préalable de celui-ci. Le gaz reliquéfié circulant dans la ligne de retour est toutefois utilisé pour alimenter l'appareil consommateur de gaz à haute pression en rejoignant le premier circuit d'alimentation. De ce fait, même si le gaz reliquéfié n'est pas renvoyé dans la cuve, celui-ci est employé à des fins utiles.

Le premier circuit d'alimentation en gaz permet de subvenir aux besoins en carburant de l'appareil consommateur de gaz à haute pression. Ce dernier peut par exemple être le moyen de propulsion de l'ouvrage flottant, par exemple un moteur ME-GI. Le premier circuit d'alimentation s'étend de la cuve jusqu'à l'appareil consommateur de gaz à haute pression. La première pompe est installée en fond de cuve et assure le pompage du gaz à l'état liquide afin que celui-ci puisse circuler dans le premier circuit d'alimentation.

Le gaz devant être à l'état vapeur pour pouvoir alimenter l'appareil consommateur de gaz à haute pression, l'évaporateur haute pression garantit l'évaporation du gaz avant sa fourniture à l'appareil consommateur de gaz à haute pression. L'évaporateur haute pression est le siège d'un échange de calories entre le gaz à l'état liquide circulant dans le premier circuit d'alimentation et un fluide caloporteur, par exemple de l'eau glycolée, de l'eau de mer ou de la vapeur d'eau. Cette dernière doit être à une température suffisamment élevée pour créer un changement d'état du gaz afin que ce dernier passe à l'état vapeur ou supercritique afin d'alimenter l'appareil consommateur de gaz à haute pression.

Avant que le gaz à l'état liquide circulant dans le premier circuit d'alimentation ne soit vaporisé par le biais de l'évaporateur haute pression, le gaz à l'état liquide traverse le premier échangeur de chaleur, puis le deuxième échangeur de chaleur. Pour cela, le premier échangeur de chaleur et le deuxième échangeur de chaleur sont liés l'un à l'autre par une portion du premier circuit d'alimentation afin que le gaz à l'état liquide puisse traverser les deux échangeurs de chaleur de manière successive. La température dudit gaz à l'état liquide tend ainsi à augmenter avant le passage de celui-ci à travers l'évaporateur haute pression. Ainsi, le gaz circulant dans le premier circuit d'alimentation peut être dans un état diphasique en sortie du deuxième échangeur de chaleur.

D'une manière générale, le gaz contenu dans la cuve peut passer de manière naturelle, ou forcée par l'ouvrage flottant, à l'état vapeur. Le gaz au sein de la cuve passant à l'état vapeur doit être évacué afin de ne pas créer de surpression au sein de la cuve.

Une telle fonction est assurée par le deuxième circuit d'alimentation en gaz de l'appareil consommateur de gaz à basse pression. Un tel deuxième circuit d'alimentation s'étend de la cuve jusqu'à l'appareil consommateur de gaz à basse pression. Ce dernier peut par exemple être un moteur auxiliaire tel qu'un générateur électrique. Le compresseur disposé sur le deuxième circuit d'alimentation est chargé d'aspirer le gaz présent dans le ciel de la cuve afin de pouvoir à la fois alimenter l'appareil consommateur de gaz à basse pression, mais aussi de réguler la pression au sein de la cuve.

En sortie du compresseur, le gaz à l'état vapeur peut alimenter l'appareil consommateur de gaz à basse pression, ou circuler à travers la ligne de retour si l'appareil consommateur de gaz à basse pression ne nécessite pas d'apport en carburant. La ligne de retour étant connectée en aval du compresseur, le gaz à l'état vapeur aspiré par le compresseur peut donc y circuler.

Le gaz à l'état vapeur circulant dans la ligne de retour traverse dans un premier temps le deuxième échangeur de chaleur, puis le premier échangeur de chaleur, avant de rejoindre le premier circuit d'alimentation. Grâce à l'échange de calories s'opérant entre le gaz à l'état liquide circulant dans le premier circuit d'alimentation et le gaz à l'état vapeur circulant dans la ligne de retour, la température du gaz à l'état vapeur diminue en traversant les échangeurs de chaleur, jusqu'à ce que ledit gaz se condense et repasse à l'état liquide sensiblement en sortie du premier échangeur de chaleur.

En sortie du premier échangeur de chaleur, le gaz reliquéfié circulant dans la ligne de retour est pompé par la deuxième pompe. Cette dernière permet d'élever la pression du gaz reliquéfié afin que celle-ci soit équilibrée avec la pression du gaz à l'état liquide circulant dans le premier circuit d'alimentation après avoir été pompé par la première pompe.

La présence de la deuxième pompe permet par ailleurs de limiter l'élévation de la pression du gaz à l'état vapeur par le compresseur. Il serait en effet envisageable que le compresseur élève la pression du gaz à l'état vapeur à une pression plus élevée pour anticiper l'équilibrage de pression entre le gaz reliquéfié circulant dans la ligne de retour et le gaz à l'état liquide pompé par la première pompe, mais une telle configuration nécessite un apport d'énergie conséquent auprès du compresseur et éventuellement un système de régulation de la pression pour que la pression reste compatible avec l'appareil consommateur de gaz à basse pression. La deuxième pompe garantit donc cette fonction afin de limiter une alimentation en énergie trop excessive du compresseur.

Selon un exemple, le premier échangeur de chaleur et le deuxième échangeur de chaleur sont en amont de l'évaporateur haute pression le long du premier circuit d'alimentation. On garantit ainsi que le gaz est à l'état liquide dans la partie du premier circuit d'alimentation qui se situe au sein du premier échangeur de chaleur et au sein du deuxième échangeur de chaleur.

Selon une caractéristique de l'invention, la ligne de retour comprend un point de divergence disposé entre le premier échangeur de chaleur et la deuxième pompe, le système d'alimentation comprenant une branche de renvoi configurée pour s'étendre entre le point de divergence et la cuve. D'une manière alternative, il est possible de conserver la fonction de renvoi vers la cuve après reliquéfaction au sein du système d'alimentation selon l'invention. Le point de divergence est disposé sur la ligne de retour en aval du premier échangeur de chaleur afin que seul du gaz reliquéfié circule dans la branche de renvoi. Le gaz reliquéfié peut alors poursuivre sa circulation dans la ligne de retour et être pompé par la deuxième pompe avant de rejoindre le premier circuit d'alimentation, ou bien circuler dans la branche de renvoi pour retourner dans la cuve. Il est également possible de mettre en oeuvre une configuration telle qu'une portion du gaz reliquéfié circule jusqu'au premier circuit d'alimentation tandis qu'une autre portion du gaz reliquéfié retourne dans la cuve via la branche de renvoi.

Selon une caractéristique de l'invention, la branche de renvoi comprend un organe de détente. L'organe de détente permet d'abaisser la pression du gaz reliquéfié circulant dans la branche de renvoi une fois celui-ci condensé lors de son passage à travers le premier échangeur de chaleur. Grâce à l'organe de détente, le gaz à l'état liquide est renvoyé dans la cuve à une température proche de la température de l'équilibre liquide -vapeur du GNL.

L'organe de détente permet par ailleurs de réguler le débit de gaz reliquéfié circulant dans la branche de renvoi. Ainsi, il est possible de limiter ce débit de gaz reliquéfié afin de minimiser la fraction de gaz qui se vaporise lors de la détente par l'organe de détente. De plus, l'organe de détente peut être complètement fermé afin d'interdire la circulation du gaz reliquéfié au sein de la branche de renvoi. Dans cette configuration, l'ensemble du gaz reliquéfié circule dans la ligne de retour jusqu'au premier circuit d'alimentation.

Selon une caractéristique de l'invention, le premier circuit d'alimentation comprend une pompe additionnelle interposée entre le premier échangeur de chaleur et le deuxième échangeur de chaleur. La pompe additionnelle permet d'augmenter la pression du gaz à l'état liquide circulant dans le premier circuit d'alimentation, et ce afin que celui-ci présente une pression compatible pour l'alimentation de l'appareil consommateur de gaz à haute pression.

Le positionnement de la pompe additionnelle entre les deux échangeurs de chaleur est particulièrement avantageux. En effet, mettre en place la pompe additionnelle en amont du premier échangeur de chaleur entraîne une élévation de la pression et de la température du gaz à l'état liquide dès la traversée du premier échangeur de chaleur, ce qui nuit à la condensation du gaz à l'état vapeur circulant dans la ligne de retour et traversant également le premier échangeur de chaleur. Par ailleurs, le gaz circulant dans le premier circuit d'alimentation pouvant être en un état diphasique en sortie du deuxième échangeur de chaleur, disposer la pompe additionnelle en aval du deuxième échangeur de chaleur peut nuire au bon fonctionnement de cette dernière étant donné que la pompe additionnelle ne permet le pompage que d'un fluide à l'état liquide. La disposition optimale consiste donc à mettre en place la pompe additionnelle entre les deux échangeurs de chaleur.

Selon une caractéristique de l'invention, la pompe additionnelle est configurée pour élever la pression du gaz à l'état liquide à une valeur comprise entre 30 et 400 bars. Plus particulièrement, la pompe additionnelle permet d'élever la pression du gaz à l'état liquide à une valeur comprise entre 30 et 400 bars notamment pour un usage avec de l'ammoniaque et ou de l'hydrogène, entre 30 et 70 bars pour un usage avec du gaz de pétrole liquéfié, et de préférence entre 150 et 400 bars pour un usage avec de l'éthane, de l'éthylène ou encore avec du gaz naturel liquéfié constitué majoritairement de méthane.

Selon une caractéristique de l'invention, le premier échangeur de chaleur est configuré pour condenser le gaz circulant au sein de la ligne de retour. Le premier échangeur de chaleur est l'échangeur traversé par le gaz à l'état liquide du premier circuit d'alimentation lorsque ledit gaz à l'état liquide est à sa température la plus basse. C'est donc l'échange de calories se déroulant au sein du premier échangeur de chaleur qui va changer l'état du gaz circulant dans la ligne de retour pour le faire passer de l'état vapeur à l'état liquide.

Selon une caractéristique de l'invention, le deuxième échangeur de chaleur est configuré pour pré-refroidir le gaz circulant au sein de la ligne de retour. En sortie du premier échangeur de chaleur, le gaz à l'état liquide circulant dans le premier circuit d'alimentation est moins froid qu'à l'entrée du premier échangeur de chaleur, un échange de chaleur ayant servi à condenser le gaz à l'état vapeur de la ligne de retour. Par la suite, le gaz à l'état liquide est compressé par la pompe additionnelle puis traverse le deuxième échangeur de chaleur. Il s'opère également un échange de calories au sein du deuxième échangeur de chaleur, permettant le pré-refroidissement du gaz à l'état vapeur au sein de la ligne de retour. Même si le débit de gaz à l'état liquide circulant dans le premier circuit d'alimentation est insuffisant pour opérer une condensation totale du gaz à l'état vapeur circulant dans la ligne de retour, un refroidissement est toutefois opéré au sein du deuxième échangeur de chaleur.

Selon une caractéristique de l'invention, le compresseur est configuré pour élever une pression du gaz à une valeur de 8 bars absolus +/- 1 bar. Cette valeur de pression assure une compatibilité du gaz à l'état vapeur présent dans le ciel de cuve et aspiré au sein du deuxième circuit d'alimentation avec l'appareil consommateur de gaz à basse pression. Grâce à la présence de la deuxième pompe, il n'est pas nécessaire de comprimer le gaz qui circule dans la ligne de retour à une pression égale à celle du gaz à l'état liquide circulant dans le premier circuit d'alimentation. On limite ainsi la consommation d'énergie du compresseur.

Selon une caractéristique de l'invention, la deuxième pompe est configurée pour élever une pression du gaz à l'état liquide circulant dans la ligne de retour à une valeur équivalente à la pression du gaz à l'état liquide générée par la première pompe. Comme cela a été décrit précédemment, le gaz à l'état vapeur circulant dans le deuxième circuit d'alimentation est comprimé à une pression de 8 bars absolus +/-1 bars. Le gaz à l'état vapeur ou reliquéfié circulant dans la ligne de retour est donc à une pression d'environ 8 bars absolus. Le gaz à l'état liquide circulant dans le premier circuit d'alimentation après avoir été pompé par la première pompe est élevé à une pression supérieure à 8 bars. La deuxième pompe doit donc davantage élever la pression du gaz reliquéfié jusqu'à ce que celle-ci atteigne une pression équivalente ou sensiblement équivalente à la pression du gaz circulant dans le premier circuit d'alimentation entre la première pompe et le premier échangeur de chaleur. Un tel équilibrage des pressions est effectué afin que le gaz reliquéfié puisse rejoindre le premier circuit d'alimentation sans difficultés de circulation liées à un potentiel différentiel de pression entre le gaz reliquéfié et le gaz à l'état liquide circulant dans le premier circuit d'alimentation.

Selon une caractéristique de l'invention, la première pompe est configurée pour élever une pression du gaz à l'état liquide à une valeur comprise entre 9 et 17 bars absolus.

Selon une caractéristique de l'invention, le deuxième échangeur de chaleur et l'évaporateur haute pression peuvent former un unique échangeur de chaleur. Le premier échangeur de chaleur est alors distinct et disposé en amont d'un unique échangeur de chaleur qui rassemble le deuxième échangeur de chaleur et l'évaporateur haute pression. Une telle alternative peut être avantageuse, par exemple, afin de réduire l'encombrement du système d'alimentation.

L'invention couvre également un ouvrage flottant de stockage et/ou de transport de gaz à l'état liquide, comprenant au moins une cuve de gaz à l'état liquide, au moins un appareil consommateur de gaz à haute pression, au moins un appareil consommateur de gaz à basse pression et au moins un système d'alimentation en gaz de ces appareils.

L'invention couvre aussi un système pour charger ou décharger un gaz liquide qui combine au moins une installation à terre et/ou portuaire et au moins un ouvrage flottant de stockage et/ou de transport de gaz liquide.

L'invention couvre enfin un procédé de chargement ou de déchargement d'un gaz liquide d'un ouvrage flottant de stockage et/ou de transport de gaz dans lequel des canalisations de chargement et/ou de déchargement de gaz à l'état liquide disposées sur un pont supérieur de l'ouvrage flottant peuvent être raccordées, au moyen de connecteurs appropriés, à un terminal maritime ou portuaire afin de transférer le gaz à l'état liquide depuis ou vers la cuve.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig. 1] représente un premier mode de réalisation d'un système d'alimentation en gaz d'au moins un appareil consommateur de gaz à haute pression et d'au moins un appareil consommateur de gaz à basse pression selon l'invention,
[Fig.2] représente un deuxième mode de réalisation du système d'alimentation,
[Fig.3] représente un troisième mode de réalisation du système d'alimentation,
[Fig.4] est une représentation schématique écorchée d'une cuve d'un ouvrage flottant et d'un terminal de chargement et/ou de déchargement de cette cuve.

Les termes « amont » et « aval » employés dans la description qui suit sont utilisés pour exprimer des positions d'éléments au sein de circuits de gaz à l'état liquide ou à l'état vapeur et se réfèrent au sens de circulation dudit gaz au sein dudit circuit.

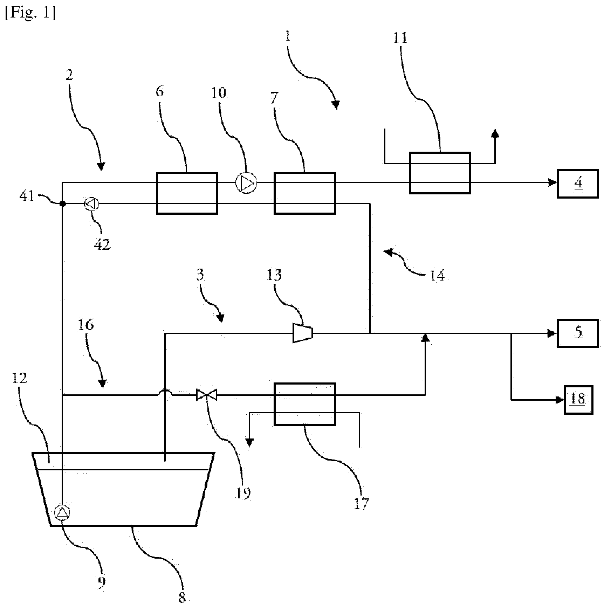

Les figures 1 à 3 représentent différents modes de réalisation d'un système d'alimentation 1 en gaz disposé sur un ouvrage flottant. Le système d'alimentation 1 permet de faire circuler du gaz pouvant être à l'état liquide, à l'état vapeur, à l'état diphasique ou à l'état supercritique, et ce à partir d'une cuve 8 de stockage et/ou de transport, et jusqu'à un appareil consommateur de gaz à haute pression 4 et/ou un appareil consommateur de gaz à basse pression 5, afin d'alimenter ces derniers en carburant.

Ledit ouvrage flottant peut par exemple être un navire pouvant stocker et/ou transporter du gaz à l'état liquide. Le système d'alimentation 1 est dans ce cas apte à utiliser le gaz à l'état liquide que l'ouvrage flottant stocke et/ou transporte pour alimenter l'appareil consommateur de gaz à haute pression 4, lequel pouvant par exemple être un moteur de propulsion, et l'appareil consommateur de gaz à basse pression 5, lequel pouvant par exemple être un générateur électrique alimentant l'ouvrage flottant en électricité.

Afin d'assurer la circulation du gaz contenu dans la cuve 8 jusqu'à l'appareil consommateur de gaz à haute pression 4, le système d'alimentation 1 est pourvu d'un premier circuit d'alimentation 2 en gaz. Le premier circuit d'alimentation 2 comprend une première pompe 9 disposée au sein de la cuve 8. La première pompe 9 permet de pomper le gaz à l'état liquide et de le faire circuler notamment au sein du premier circuit d'alimentation 2. En aspirant le gaz à l'état liquide, la première pompe 9 permet également d'élever la pression de celui-ci à une valeur comprise entre 9 et 17 bars.

Le gaz à l'état liquide, selon un sens de circulation allant de la cuve 8 vers l'appareil consommateur de gaz à haute pression 4, traverse un premier échangeur de chaleur 6, est pompé par une pompe additionnelle 10 et traverse un deuxième échangeur de chaleur 7. Les détails concernant les deux échangeurs de chaleur 6, 7 seront décrits par la suite.

Suite à la traversée du deuxième échangeur de chaleur 7, le gaz circule jusqu'à un évaporateur haute pression 11. L'évaporateur haute pression 11 permet de modifier l'état du gaz circulant dans le premier circuit d'alimentation 2 afin de le faire passer à l'état vapeur ou supercritique. Un tel état permet au gaz d'être compatible pour alimenter l'appareil consommateur de gaz à haute pression 4. L'évaporation du gaz à l'état liquide peut par exemple se faire par échange de chaleur avec un fluide caloporteur à température suffisamment élevée pour évaporer le gaz à l'état liquide, ici de l'eau glycolée, de l'eau de mer ou de la vapeur d'eau.

Selon un premier mode de réalisation illustré à la [Fig. 1], le premier échangeur de chaleur 6, le deuxième échangeur de chaleur 7 et l'évaporateur haute pression 11 sont des échangeurs de chaleur séparés les uns des autres. Une telle configuration permet de concevoir et de fabriquer chacun des échangeurs de chaleur dans une technologie adaptée à la pression des fluides les parcourant. Dans le cas d'espèce, le premier échangeur de chaleur 6 peut être réalisé selon une technologie moins coûteuse que celle servant à la fabrication du deuxième échangeur de chaleur 7, car la pression au sein du premier échangeur est significativement inférieure à celle présente au sein du deuxième échangeur de chaleur 7. Il en va de même pour l'évaporateur haute pression 11.

La hausse de la pression du gaz est assurée par la pompe additionnelle 10 lorsque celle-ci pompe le gaz à l'état liquide. La pompe additionnelle 10 permet d'élever la pression du gaz à l'état liquide à une valeur comprise entre 30 et 70 bars pour un usage avec du gaz de pétrole liquéfié, et de préférence entre 150 et 400 bars pour un usage avec de l'éthane, de l'éthylène ou encore avec du gaz naturel liquéfié constitué majoritairement de méthane.

Grâce à la combinaison de la pompe additionnelle 10 et de l'évaporateur haute pression 11, le gaz est à une pression et dans un état compatible pour l'alimentation de l'appareil consommateur à haute pression 4. Une telle configuration permet d'éviter l'installation de compresseurs haute pression sur le premier circuit d'alimentation 2 qui présentent des contraintes de coûts et génèrent de fortes vibrations.

Au sein de la cuve 8, une partie de la cargaison de gaz peut naturellement passer à l'état vapeur et se diffuser dans un ciel de cuve 12. Afin d'éviter une surpression au sein de la cuve 8, le gaz à l'état vapeur contenu dans le ciel de cuve 12 doit être évacué. Or, le premier circuit d'alimentation 2 est configuré pour utiliser le gaz à l'état liquide pour alimenter l'appareil consommateur de gaz à haute pression 4.

Le système d'alimentation 1 comprend donc un deuxième circuit d'alimentation 3 en gaz, qui utilise le gaz à l'état vapeur pour alimenter l'appareil consommateur de gaz à basse pression 5. Le deuxième circuit d'alimentation 3 s'étend donc entre le ciel de cuve 12 et l'appareil consommateur de gaz à basse pression 5. Afin d'aspirer le gaz à l'état vapeur contenu dans le ciel de cuve 12, le deuxième circuit d'alimentation 3 comprend un compresseur 13. En plus d'aspirer le gaz à l'état vapeur, le compresseur 13 permet également d'élever une pression du gaz à l'état vapeur circulant dans le deuxième circuit d'alimentation 3 à une pression 8 bars absolus +/- 1 bar, et ce afin que le gaz à l'état vapeur soit à une pression compatible pour l'alimentation de l'appareil consommateur de gaz à basse pression 5. Le deuxième circuit d'alimentation 3 permet ainsi d'alimenter l'appareil consommateur de gaz à basse pression 5, et ce tout en régulant la pression au sein de la cuve 8 en aspirant le gaz à l'état vapeur présent dans le ciel de cuve 12.

La présence du gaz à l'état vapeur en quantité excessive au sein du ciel de cuve 12 entraîne une surpression au sein de la cuve 8. Il est donc nécessaire d'évacuer le gaz à l'état vapeur dans le but d'abaisser la pression au sein de la cuve 8. Le gaz à l'état vapeur en excès peut alors par exemple être éliminé par un brûleur 18. Toutefois, le système d'alimentation 1 selon l'invention comprend une ligne de retour 14 raccordée sur le deuxième circuit d'alimentation 3 en aval du compresseur 13 par rapport à un sens de circulation du gaz à l'état vapeur circulant dans le deuxième circuit d'alimentation 3. Selon le sens de circulation du gaz à l'état vapeur circulant dans la ligne de retour 14, ledit gaz traverse le deuxième échangeur de chaleur 7 dans un premier temps, puis traverse le premier échangeur de chaleur 6. L'échange de calories s'effectuant au sein du premier échangeur de chaleur 6 et du deuxième échangeur de chaleur 7 est donc entre le gaz à l'état liquide circulant dans le premier circuit d'alimentation 2 et le gaz à l'état vapeur circulant dans la ligne de retour 14. L'objectif de cet échange de calories est de condenser le gaz à l'état vapeur de la ligne de retour 14, afin que celui-ci passe à l'état liquide.

Une fois le gaz circulant dans la ligne de retour 14 recondensé, il est envisageable de le renvoyer dans la cuve 8. Un tel renvoi nécessite toutefois de détendre le gaz recondensé ce qui peut conduire à une vaporisation partielle de celui-ci avant de retourner dans la cuve 8. Ainsi, une fraction à hauteur de 15% du gaz recondensé est vaporisée, ce qui nuit à la productivité du système d'alimentation 1.

Pour éviter cela, la ligne de retour 14 s'étend jusqu'à un point de convergence 41 disposé au niveau du premier circuit d'alimentation 2, entre la première pompe 9 et le premier échangeur de chaleur 6. Autrement dit, le gaz circulant dans la ligne de retour 14 rejoint le premier circuit d'alimentation 2 au lieu de retourner dans la cuve 8. La re-circulation dans le premier circuit d'alimentation 2 permet d'alimenter par la suite l'appareil consommateur de gaz à haute pression 4 tel que cela a été décrit précédemment.

La ligne de retour 14 comprend par ailleurs une deuxième pompe 42 disposée entre le premier échangeur de chaleur 6 et le point de convergence 41. La deuxième pompe 42 permet d'augmenter la pression du gaz circulant dans la ligne de retour 14 afin d'opérer un équilibrage des pressions avec la pression du gaz à l'état liquide circulant dans le premier circuit d'alimentation 2 après avoir été mis sous pression par la première pompe 9. Cet équilibrage de pression permet de fluidifier la circulation du gaz reliquéfié de la ligne de retour 14 vers le premier circuit d'alimentation 2.

La deuxième pompe 42 permet par ailleurs d'éviter la mise sous pression par le compresseur 13 du gaz à l'état vapeur circulant dans le deuxième circuit d'alimentation 3 à une pression supérieure à environ 8 bars. Cela limite l'énergie nécessaire pour l'alimentation du compresseur 13.

C'est à l'entrée du premier échangeur de chaleur 6 que le gaz à l'état liquide du premier circuit d'alimentation 2 présente la température la plus basse. De ce fait, c'est donc après avoir traversé le premier échangeur de chaleur 6 que le gaz circulant dans la ligne de retour 14 est condensé. Le gaz de la ligne de retour 14 est donc à l'état vapeur à l'entrée du premier échangeur de chaleur 6 et sort à l'état liquide suite à l'échange de calories se déroulant au sein du premier échangeur de chaleur 6, et ce avant d'être pompé par la deuxième pompe 42 et de rejoindre le premier circuit d'alimentation 2. Le premier échangeur de chaleur 6 fait donc office de condenseur.

Le ratio de quantité de gaz à l'état vapeur condensé par rapport à la quantité de gaz à l'état liquide circulant au sein du premier circuit d'alimentation 2 est d'environ 16% +/- 5%. Autrement dit, pour environ six tonnes par heure de gaz à l'état liquide circulant dans le premier circuit d'alimentation 2, environ une tonne par heure de gaz à l'état vapeur circulant dans la ligne de retour est condensé.

Le deuxième échangeur de chaleur 7 est situé en aval du premier échangeur de chaleur 6 selon le sens de circulation du gaz dans le premier circuit d'alimentation 2, et en amont du premier échangeur de chaleur 6 selon le sens de circulation du gaz dans la ligne de retour 14. Le deuxième échangeur de chaleur 7 assure donc un pré-refroidissement du gaz à l'état vapeur circulant dans la ligne de retour 14 avant que celui-ci soit condensé au sein du premier échangeur de chaleur 6. Au niveau du premier circuit d'alimentation 2, le gaz à l'état liquide à l'entrée du deuxième échangeur de chaleur 7 a auparavant traversé le premier échangeur de chaleur 6 et a été pompé par la pompe additionnelle 10, ce qui a donc augmenté sa température et sa pression. Il est ainsi possible que suite à l'échange de calories se produisant au niveau du deuxième échangeur de chaleur 7, le gaz circulant au sein du premier circuit d'alimentation 2 sorte du deuxième échangeur de chaleur 7 dans un état diphasique. La température du gaz circulant dans la ligne de retour 14 est donc abaissée après la traversée du deuxième échangeur de chaleur 7, mettant en oeuvre le pré-refroidissement indiqué plus haut.

La pompe additionnelle 10 est avantageusement disposée entre les deux échangeurs de chaleur 6, 7. La présence de la pompe additionnelle 10 entre le premier échangeur de chaleur 6 et le deuxième échangeur de chaleur 7 assure le fait que seul du gaz à l'état liquide circule à travers la pompe additionnelle 10, et non du gaz dans un état diphasique risquant d'endommager cette dernière.

Par ailleurs, la présence de la pompe additionnelle 10 en aval du premier échangeur de chaleur 6 assure la hausse de pression du gaz à l'état liquide, et cela sans perturber l'échange de calories se produisant au sein du premier échangeur de chaleur 6. La condensation du gaz à l'état vapeur circulant dans la ligne de retour 14 est ainsi effectuée de manière optimale.

Le système d'alimentation 1 comprend également une ligne d'alimentation auxiliaire 16, s'étendant du premier circuit d'alimentation 2, par un piquage entre la première pompe 9 et le premier échangeur de chaleur 6, jusqu'au deuxième circuit d'alimentation 3, en se raccordant à celui-ci entre le compresseur 13 et l'appareil consommateur de gaz à basse pression 5. La ligne d'alimentation auxiliaire 16 permet d'alimenter l'appareil consommateur de gaz à basse pression 5 en cas de débit insuffisant de gaz à l'état vapeur formé au sein du ciel de cuve 12.

Lorsque le gaz à l'état vapeur n'est pas présent en quantité suffisante dans le ciel de cuve 12, le gaz à l'état liquide pompé par la première pompe 9 peut alors circuler au sein de cette ligne d'alimentation auxiliaire 16 afin d'alimenter l'appareil consommateur de gaz à basse pression 5. Pour ce faire, la ligne d'alimentation auxiliaire 16 traverse un évaporateur basse pression 17 afin que le gaz à l'état liquide circulant dans la ligne d'alimentation auxiliaire 16 passe à l'état de vapeur. Le fonctionnement de l'évaporateur basse pression 17 peut par exemple être identique à celui de l'évaporateur haute pression 11, c'est-à-dire que le gaz est évaporé par échange de chaleur avec un fluide caloporteur à température suffisamment élevée pour évaporer le gaz à l'état liquide. En sortie de l'évaporateur basse pression 17, le gaz à l'état vapeur circule au sein de la ligne d'alimentation auxiliaire 16, puis rejoint le deuxième circuit d'alimentation 3 afin d'alimenter l'appareil consommateur de gaz à basse pression 5.

On comprend de ce qui précède que la ligne d'alimentation auxiliaire 16 n'est utilisée qu'en l'absence de gaz à l'état vapeur en quantité suffisante au sein du ciel de cuve 12. Ainsi, la ligne d'alimentation auxiliaire 16 comprend une vanne 19 assurant le contrôle de la circulation de gaz au sein de la ligne d'alimentation auxiliaire 16 lorsque l'utilisation de celle-ci n'est pas nécessaire.

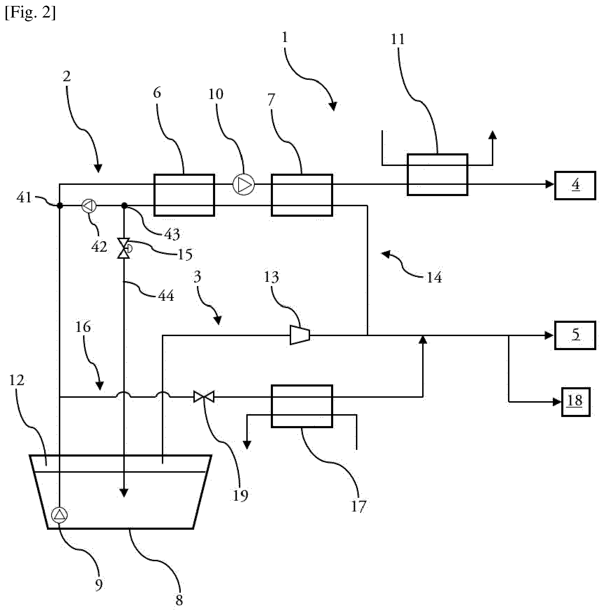

La [Fig.2] représente un deuxième mode de réalisation du système d'alimentation 1 selon l'invention. Ce deuxième mode de réalisation se distingue du premier mode de réalisation par le fait que le système d'alimentation comprend une branche de renvoi 44 s'étendant entre un point de divergence 43 disposé sur la ligne de retour 14 et la cuve 8. Le point de divergence 43 est plus précisément disposé entre le premier échangeur de chaleur 6 et la deuxième pompe 42.

La branche de renvoi 44 offre l'alternative au gaz reliquéfié en renvoyant ce dernier vers la cuve 8 plutôt que de le faire circuler au sein du premier circuit d'alimentation 2. Afin d'aligner la pression du gaz circulant dans la ligne de retour 14 à la pression qui règne dans la cuve 8, la ligne de retour 14 peut comprendre un organe de détente 15 qui abaisse la pression du gaz à une pression comprise entre 1 et 3 bars absolus. Une fois que le gaz est condensé, celui-ci poursuit sa course jusqu'à la cuve 8.

Afin de limiter la vaporisation du gaz reliquéfié circulant dans la branche de renvoi 44 lors de la détente de celui-ci par l'organe de détente 15, le gaz reliquéfié peut circuler de manière limitée au sein de la branche de renvoi 44. L'organe de détente 15, en plus d'opérer une détente sur le gaz circulant dans la branche de renvoi 44, permet également de réguler le débit de celui-ci. Il est ainsi possible de répartir le gaz reliquéfié en une première fraction poursuivant sa circulation dans la ligne de retour 14 et rejoignant le premier circuit d'alimentation 2 après avoir été pompée par la deuxième pompe 42, et en une deuxième fraction circulant au sein de la branche de renvoi 44 et retournant dans la cuve 8 après avoir été détendue par l'organe de détente 15.

L'organe de détente 15 peut par ailleurs être complètement fermé afin que l'intégralité du gaz reliquéfié circulant dans la ligne de retour 14 rejoigne le premier circuit d'alimentation 2.

Les caractéristiques non décrites du deuxième mode de réalisation étant identiques à celles du premier mode de réalisation, on se référera donc à la description de la [Fig.1] pour la description des éléments communs auxdits modes de réalisation.

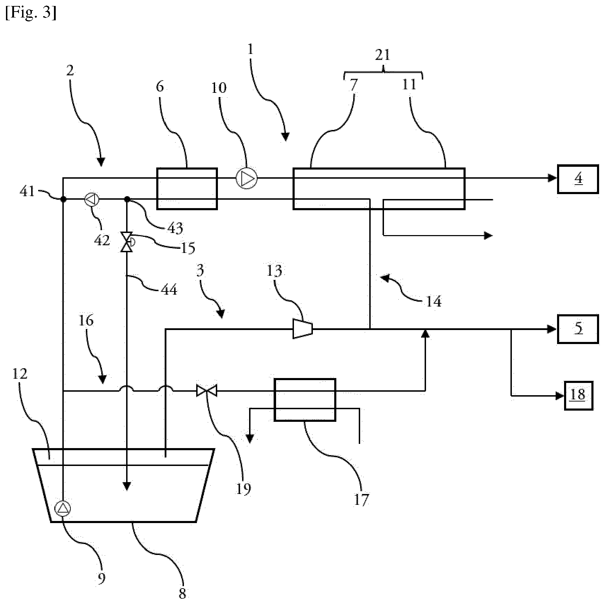

La [Fig.3] montre un troisième mode de réalisation du système d'alimentation 1 en tous points identiques à ce qui est décrit en [Fig.2], à l'exception des éléments suivants.

Selon le troisième mode de réalisation du système d'alimentation 1, le deuxième échangeur de chaleur 7 et l'évaporateur haute pression 11 forme un unique échangeur de chaleur 21. L'illustration du troisième mode de réalisation permet de concevoir et de fabriquer l'unique échangeur de chaleur 21 rassemblant le deuxième échangeur de chaleur 7 et l'évaporateur haute pression 11, ces deux composants étant soumis à une même haute pression qui dicte la technologie employée pour la fabrication de cet échangeur de chaleur commun. Une telle solution peut également se justifier par un manque d'espace ne permettant pas de mettre en place le deuxième échangeur de chaleur 7 et l'évaporateur haute pression 11 distinct l'un de l'autre.

Les caractéristiques non décrites du troisième mode de réalisation étant identiques à celles des premiers et deuxièmes modes de réalisation, on se référera donc à la description des figures 1 et 2 pour la description des éléments communs auxdits modes de réalisation. Il est à relever que le troisième mode de réalisation comprend la branche de renvoi 44, mais il est tout à fait envisageable de mettre en oeuvre un système d'alimentation 1 dépourvu de la branche de renvoi 44, tel que cela est illustré sur la [Fig.1], mais dont le deuxième échangeur de chaleur 7 et l'évaporateur haute pression 11 forment l'unique échangeur de chaleur 21 tel que cela est illustré sur la [Fig.3].

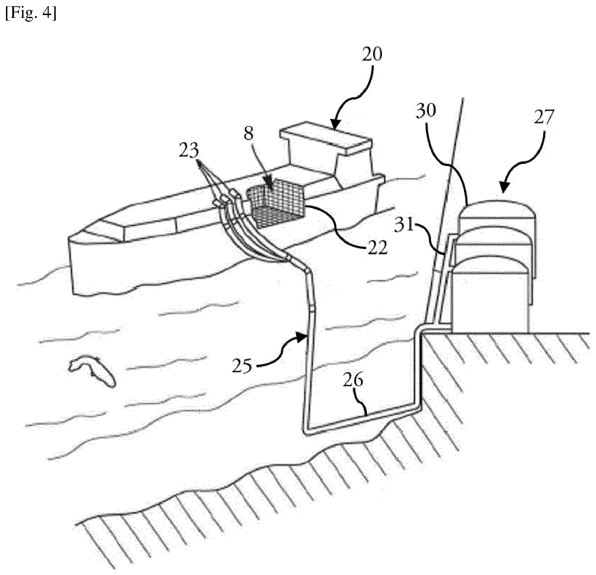

La [Fig.4] est une vue écorchée d'un ouvrage flottant 20 qui montre la cuve 8 qui contient le gaz à l'état liquide et à l'état vapeur, cette cuve 8 étant de forme générale prismatique montée dans une double coque 22 de l'ouvrage flottant 20. La paroi de la cuve 8 comporte une membrane d'étanchéité primaire destinée à être en contact avec le gaz à l'état liquide contenu dans la cuve 8, une membrane d'étanchéité secondaire agencée entre la membrane d'étanchéité primaire et la double coque 22 de l'ouvrage flottant 20, et deux barrières thermiquement isolantes agencées respectivement entre la membrane d'étanchéité primaire et la membrane d'étanchéité secondaire et entre la membrane d'étanchéité secondaire et la double coque 22.

Des canalisations 23 de chargement et/ou de déchargement de gaz à l'état liquide disposées sur le pont supérieur de l'ouvrage flottant 20 peuvent être raccordées, au moyen de connecteurs appropriées, à un terminal maritime ou portuaire pour transférer la cargaison de gaz à l'état liquide depuis ou vers la cuve 8.

La [Fig.4] représente également un exemple de terminal maritime ou portuaire comportant un équipement de chargement et/ou de déchargement 25, une conduite sous-marine 26 et une installation à terre et/ou portuaire 27. L'installation à terre et/ou portuaire 27 peut par exemple être agencée sur le quai d'un port, ou selon un autre exemple être agencée sur une plate-forme gravitaire en béton. L'installation à terre et/ ou portuaire 27 comporte des cuves de stockage de gaz à l'état liquide 30 et des conduites de liaison 31 reliées par la conduite sous-marine 26 à l'équipement de chargement et/ou de déchargement 25.

Pour engendrer la pression nécessaire au transfert du gaz à l'état liquide, on met en oeuvre des pompes équipant l'installation à terre et/ou portuaire 27 et/ou des pompes équipant l'ouvrage flottant 20.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'était fixée, et permet de proposer un système d'alimentation en gaz pour des appareils consommateurs de gaz à haute ou à basse pression dont la mise en haute pression se fait à l'aide de pompes et d'évaporateur, et comprenant un moyen de condensation d'un gaz à l'état vapeur afin de le renvoyer vers un circuit alimentant l'un ou l'autre des appareils consommateur de gaz. Des variantes non décrites ici pourraient être mises en oeuvre sans sortir du contexte de l'invention, dès lors que, conformément à l'invention, elles comprennent un système d'alimentation conforme à l'invention.

## Revendications

1. Système d'alimentation (1) en gaz d'au moins un appareil consommateur de gaz à haute pression (4) et d'au moins un appareil consommateur de gaz à basse pression (5) d'un ouvrage flottant (20) comprenant au moins une cuve (8) configurée pour contenir le gaz, le système d'alimentation (1) comprenant :
- au moins un premier circuit d'alimentation (2) en gaz de l'appareil consommateur de gaz à haute pression (4), comprenant au moins une première pompe (9) configurée pour pomper le gaz prélevé à l'état liquide dans la cuve (8),
- au moins un évaporateur haute pression (11) configuré pour évaporer le gaz circulant dans le premier circuit d'alimentation (2) en gaz,
- au moins un deuxième circuit d'alimentation (3) en gaz de l'appareil consommateur de gaz à basse pression (5), comprenant au moins un compresseur (13) configuré pour comprimer du gaz prélevé à l'état vapeur dans la cuve (8) jusqu'à une pression compatible avec les besoins de l'appareil consommateur de gaz à basse pression (5),
- au moins une ligne de retour (14) de gaz connectée en entrée au deuxième circuit d'alimentation (3) en aval du compresseur (13),
- au moins un premier échangeur de chaleur (6) et au moins un deuxième échangeur de chaleur (7) chacun configurés pour opérer un échange de chaleur entre le gaz circulant dans la ligne de retour (14) à l'état vapeur et le gaz à l'état liquide circulant dans le premier circuit d'alimentation (2),
**caractérisé en ce que** la ligne de retour (14) est connectée en sortie au premier circuit d'alimentation (2) au niveau d'un point de convergence (41) disposé entre la première pompe (9) et le premier échangeur de chaleur (6), la ligne de retour (14) comprenant une deuxième pompe (42) disposée entre le premier échangeur de chaleur (6) et le point de convergence (41).

2. Système d'alimentation (1) selon la revendication 1, dans lequel la ligne de retour (14) comprend un point de divergence (43) disposé entre le premier échangeur de chaleur (6) et la deuxième pompe (42), le système d'alimentation (1) comprenant une branche de renvoi (44) configurée pour s'étendre entre le point de divergence (43) et la cuve (8).

3. Système d'alimentation (1) selon la revendication précédente, dans lequel la branche de renvoi (44) comprend un organe de détente (15).

4. Système d'alimentation (1) selon l'une quelconque des revendications précédentes, dans lequel le premier circuit d'alimentation (2) comprend une pompe additionnelle (10) interposée entre le premier échangeur de chaleur (6) et le deuxième échangeur de chaleur (7).

5. Système d'alimentation (1) selon la revendication précédente, dans lequel la pompe additionnelle (10) est configurée pour élever la pression du gaz à l'état liquide à une valeur comprise entre 30 et 400 bars.

6. Système d'alimentation (1) selon l'une quelconque des revendications précédentes, dans lequel le premier échangeur de chaleur (6) est configuré pour condenser le gaz circulant au sein de la ligne de retour (14).

7. Système d'alimentation (1) selon l'une quelconque des revendications précédentes, dans lequel le deuxième échangeur de chaleur (7) est configuré pour pré-refroidir le gaz circulant au sein de la ligne de retour (14).

8. Système d'alimentation (1) selon l'une quelconque des revendications précédentes, dans lequel le compresseur (13) est configuré pour élever une pression du gaz à une valeur de 8 bars absolus +/- 1 bar.

9. Système d'alimentation (1) selon l'une quelconque des revendications précédentes, dans lequel la deuxième pompe (42) est configurée pour élever une pression du gaz à l'état liquide circulant dans la ligne de retour (14) à une valeur équivalente à la pression du gaz à l'état liquide générée par la première pompe (9).

10. Système d'alimentation (1) selon l'une quelconque des revendications précédentes, dans lequel la première pompe (9) est configurée pour élever une pression du gaz à l'état liquide à une valeur comprise entre 9 et 17 bars absolus.

11. Système d'alimentation selon l'une quelconque des revendications précédentes, dans lequel le deuxième échangeur de chaleur (7) et l'évaporateur haute pression (11) forment un unique échangeur de chaleur (21).

12. Ouvrage flottant (20) de stockage et/ou de transport de gaz à l'état liquide, comprenant au moins une cuve (8) de gaz à l'état liquide, au moins un appareil consommateur de gaz à haute pression (4), au moins un appareil consommateur de gaz à basse pression (5) et au moins un système d'alimentation (1) en gaz de ces appareils selon l'une quelconque des revendications précédentes.

13. Système pour charger ou décharger un gaz liquide qui combine au moins une installation à terre et/ou portuaire (27) et au moins un ouvrage flottant (20) de stockage et/ou de transport de gaz liquide selon la revendication précédente.

14. Procédé de chargement ou de déchargement d'un gaz liquide d'un ouvrage flottant (20) de stockage et/ou de transport de gaz selon la revendication 12, dans lequel des canalisations (23) de chargement et/ou de déchargement de gaz à l'état liquide disposées sur un pont supérieur de l'ouvrage flottant (20) peuvent être raccordées, au moyen de connecteurs appropriés, à un terminal maritime ou portuaire afin de transférer le gaz à l'état liquide depuis ou vers la cuve (8).
